# FASCICULE DE BREVET EUROPEEN

(11) **EP 2 648 577 B1**
(45) Date de publication et mention de la délivrance du brevet: **10.02.2016**
(21) Numéro de dépôt: 11804722.4
(22) Date de dépôt: 01.12.2011
(51) Int. Cl.: A47J 31/46, A47J 31/54

(54) **APPAREIL ELECTROMENAGER DE PREPARATION DE BOISSONS A BASE D'EAU CHAUDE A DOUBLE RESERVOIR**
HAUSHALTSGERÄT MIT ZWEIFACHTANK FÜR DIE ZUBEREITUNG VON GETRÄNKEN AUF HEISSWASSERBASIS
DOUBLE-RESERVOIR HOUSEHOLD APPLIANCE FOR PREPARING HOT-WATER-BASED DRINKS

(30) Priorité: 06.12.2010 FR 1060114
(43) Date de publication de la demande: 16.10.2013
(73) Titulaire: SEB S.A., 69130 Ecully (FR)
(72) Inventeur: GUEGAN, Laurent, F-74150 Lornay (FR)
(74) Mandataire: Bourrières, Patrice
(86) Numéro de dépôt international: PCT/FR2011/052845
(87) Numéro de publication internationale: WO 2012/076787

(56) Documents cités:
- EP-A1- 0 499 689
- WO-A1-2010/040994
- CN-Y- 2 506 171
- DE-A1- 3 607 173
- DE-A1- 4 108 631
- DE-C2- 2 932 053
- US-A- 5 233 914
- US-A1- 2004 118 292

## Description

La présente invention concerne le domaine technique général des appareils électroménagers comprenant une chaudière prévue pour la production d'eau chaude et plus particulièrement les appareils électroménagers de préparation de boissons à base d'eau chaude.

Il est connu du document EP0988820 de réaliser une chaudière de type bouilleur pour appareil électroménager comprenant une chambre d'ébullition munie d'un fond recevant un élément chauffant. La chambre d'ébullition comporte un tube d'admission d'eau présentant une entrée reliée à un réservoir d'eau par l'intermédiaire d'un conduit comportant un clapet anti-retour. La chambre d'ébullition comporte un tube ascendant d'évacuation de l'eau chauffée comprenant une partie inférieure dont l'extrémité est disposée à proximité du fond de la chambre d'ébullition et une partie supérieure émergeant hors de la chambre. Le tube d'évacuation est vertical et présente, dans la chambre d'ébullition, une ouverture à proximité du plafond de ladite chambre. Une telle chaudière présente l'avantage d'être économique à réaliser car l'alimentation en eau de la chambre se fait par gravité depuis le réservoir et ne nécessite pas de pompe. Cependant cette chaudière présente un certain nombre d'inconvénients.

Tout d'abord, la surface du fond est limitée et ne permet pas d'avoir une surface d'échange importante avec l'eau pour installer un élément chauffant puissant. Ainsi, la mise en chauffe est lente faisant que le temps d'attente pour avoir un écoulement de l'eau chaude est long et la quantité d'eau chaude produite est relativement faible à chaque cycle d'ébullition.

Ensuite, à chaque cycle d'ébullition l'eau chaude produite est éjectée hors de la chambre d'ébullition et il se produit une aspiration brutale de l'eau du réservoir. Cette aspiration brutale crée un vortex en sortie du réservoir qui peut induire une aspiration d'air lorsque la hauteur d'eau dans le réservoir est peu importante.

Cette aspiration d'air produit un son désagréable et induit une baisse de la production d'eau chaude.

De plus, en début du cycle de vidange de l'eau chaude, l'eau située dans la partie haute du tube est froide et se trouve mélangée dans le récipient recevant l'eau produite par l'appareil ce qui en réduit la température globale.

Par ailleurs, l'élément chauffant de la chaudière ayant une inertie thermique importante, lors de l'arrêt de la chauffe en cours de cycle, l'eau chaude continue de couler lentement, pouvant provoquer un débordement du récipient recevant cette eau chaude ou encore souiller la surface située sous la sortie d'eau chaude en cas de retrait du récipient.

Le document DE 29 32 053 C2 décrit une machine à café où l'eau froide ou tiède est retournée vers le conduit entre le réservoir d'eau et la chaudière à l'aide d'une vanne qui change de position quand l'eau est suffisamment chaude.

Le document DE 41 08 631 A1 décrit une machine à café avec une réserve intermédiaire entre le réservoir et la chaudière comprenant un conduit d'évent. Finalement, le document DE 36 07 173 A1 décrit une machine à café avec une chambre de séparation pour retourner l'eau tiède vers le conduit entre le réservoir d'eau et la chaudière.

Un premier objectif de la présente invention est de proposer un appareil électroménager qui réduise voire annule les risques d'aspiration d'air lors de la vidange du réservoir d'eau sous l'effet conjugué de la gravité et de la dépression induite par l'éjection de l'eau en ébullition.

Afin d'atteindre cet objectif l'invention concerne un appareil électroménager pour la préparation de boissons à base d'eau chaude selon la revendication 1.

La mise en oeuvre d'une réserve intermédiaire entre le réservoir principal et la chambre d'ébullition de la chaudière permet d'éviter l'aspiration d'air avec l'eau lors du remplissage brutal de la chambre d'ébullition sous l'effet de l'éjection de l'eau bouillante. De manière préférée, la réserve intermédiaire aura un volume inférieur à celui du réservoir principal, de sorte que la réserve intermédiaire sera plus haute que large par comparaison au réservoir principal qui sera aussi large que haut voire plus large que haut. Il pourra en outre être remarqué que l'alimentation en eau par gravité de la chambre d'ébullition permet d'éviter l'utilisation de composants onéreux du type pompe et d'avoir une conception simple et économique. L'absence de composants électriques du type pompe ou électrovanne comportant des pièces en mouvement permet d'obtenir une chaudière très fiable.

Selon une caractéristique de l'invention visant à réduire au maximum les risques d'apparition de vortex susceptible d'aspirer de l'air sous l'effet de l'aspiration résultant de l'éjection brutale de l'eau bouillante, la réserve intermédiaire présente une section de passage maximale dont la plus grande dimension est inférieure à la hauteur d'eau mesurée entre l'entrée de la chambre d'ébullition et le niveau de remplissage maximum de la réserve intermédiaire, le réservoir principal étant vide.

Selon l'invention la réserve intermédiaire est susceptible de présenter différentes formes et notamment une forme parallélépipédique ou une forme à section droite transversale rectangulaire. Selon l'invention la réserve intermédiaire peut également être formée par une augmentation locale des tubes ou canalisations reliant le réservoir principal à la chambre d'ébullition. Ainsi, la réserve intermédiaire pourra présenter une section transversale interne de forme circulaire ou en forme de disque. La réserve intermédiaire présentera une section de passage maximale de forme circulaire et selon une caractéristique de l'invention dont le diamètre de cette section de passage maximal pourra être inférieur à la hauteur d'eau mesurée entre l'entrée de la chambre d'ébullition et le niveau de remplissage maximum de la réserve intermédiaire, le réservoir principal étant vide. Cette caractéristique, qui traduit le fait que la réserve intermédiaire présente une forme plus haute que large, réduit les risques d'aspiration d'air.

Un autre objectif de l'invention est d'éviter que l'eau tiède ou froide, contenue dans les canaux reliant la chambre d'ébullition à la tête de distribution avant le début des cycles de chauffage et donc plus froide que l'eau en provenance de la chambre d'ébullition, ne se mélange avec l'eau bouillante au niveau de la tête de distribution induisant une diminution notable de la température de l'eau distribuée.

Afin d'atteindre cet objectif, la tête de distribution de l'appareil électroménager selon l'invention, comprend un conduit d'évacuation d'eau tiède qui est raccordé à la réserve intermédiaire. Un tel conduit d'évacuation de l'eau tiède permet de la collecter avant son mélange avec l'eau chaude fournie en sortie de la tête de distribution. De plus, le recyclage de l'eau tiède dans la réserve intermédiaire permet de réchauffer l'eau contenu dans cette dernière est donc de raccourcir la durée du cycle d'ébullition dans la chaudière. Le recyclage de l'eau tiède permet donc d'augmenter les performances énergétiques de l'appareil électroménager selon l'invention. Le conduit d'évacuation de l'eau tiède permet également de récupérer l'eau de condensation susceptible de s'accumuler dans la tête de distribution.

Afin de privilégier l'aspiration de l'eau tiède du conduit par rapport à l'eau froide du réservoir, lors du remplissage de la chambre d'ébullition sous l'effet de la dépression engendrée par la condensation de la vapeur d'eau, le conduit d'évent comporte une section minimale de passage qui pourra être supérieure à la section minimale du raccordement de la réserve intermédiaire au réservoir principal. Ainsi, les pertes de charge dans le conduit d'évacuation de l'eau tiède seront moindres que celles au niveau du raccordement de la réserve intermédiaire au réservoir principal.

Selon l'invention, la chambre d'ébullition comprend une sortie raccordée à la tête de distribution par une canalisation ascendante qui comprend des moyens de séparation de l'eau tiède, contenue initialement avant ébullition dans la canalisation ascendante, de l'eau plus chaude en provenance de la chambre, les moyens de séparation étant adaptés pour évacuer l'eau tiède dans le conduit d'évacuation.

Selon une caractéristique de cette variante, la chaudière comprend, dans la chambre d'ébullition, un tube ascendant d'évacuation de l'eau chauffée dont l'extrémité inférieure est disposée à proximité du fond de la chambre d'ébullition et dont l'extrémité supérieure est raccordée à la sortie de la chambre d'ébullition, les moyens de séparation étant adaptés pour évacuer l'eau tiède dans le conduit d'évacuation.

En effet, en fonctionnement, l'eau contenue dans le tube ascendant chauffe moins vite que l'eau contenue entre la paroi verticale de la chambre et l'extérieur du tube ascendant. Ainsi, lors de l'expulsion, l'eau contenue dans le tube ascendant n'a pas atteint l'ébullition. En séparant ce volume d'eau du reste du volume d'eau porté à ébullition contenu dans la chambre, cette disposition permet donc d'obtenir, au niveau de la tête de distribution, de l'eau chaude proche de la température d'ébullition.

Selon l'invention les moyens de séparation comprennent en partie terminale de la canalisation ascendante, un canal vertical qui possède une bouche de sortie dans une chambre de séparation de la tête de distribution et qui est raccordé par une sortie latérale située en dessous de la bouche de sortie, au conduit d'évacuation d'eau tiède. L'efficacité des moyens de séparation ainsi réalisés provient du fait qu'au début du chauffage de l'eau dans la chambre d'ébullition jusqu'au commencement de l'ébullition, l'eau commence à circuler lentement dans la canalisation ascendante de sorte qu'elle n'aura pas, au niveau du canal vertical, une vitesse et un débit suffisant pour atteindre la bouche de sortie de sorte qu'elle s'écoulera naturellement par la sortie latérale. En revanche, lorsque l'eau bout de manière importante à l'intérieur de la chambre d'ébullition, la vitesse de l'eau dans la conduite ascendante est suffisante pour qu'elle soit projetée au-delà de la bouche de sortie de sorte qu'elle ne s'écoule presque plus, voire plus par la sortie latérale. Il doit de plus être noté que les moyens de séparation permettent également une récupération de l'eau qui pourrait continuer à s'écouler par la conduite ascendante après arrêt de l'alimentation électrique de la chaudière en raison de l'inertie thermique des moyens de chauffage.

Afin de privilégier l'éjection de l'eau par la bouche de sortie lorsque le débit de l'eau est suffisant et correspond à une ébullition importante dans la chambre d'ébullition, la section de passage de la bouche de sortie est supérieure à la section de passage de la sortie latérale. Cette disposition de l'invention contribue à l'efficacité des moyens de séparation.

Selon une autre caractéristique de cette forme de réalisation de l'invention, le conduit d'évacuation d'eau tiède débouche dans le conduit d'évent, ledit conduit d'évent assurant le raccordement du conduit d'évacuation d'eau tiède à la réserve intermédiaire.

Un autre objectif de la présente invention est de proposer un appareil électroménager dont la chaudière permet de produire rapidement et en quantité importante de l'eau chaude tout en présentant une conception très simple et économique à mettre en oeuvre. L'invention vise également à proposer un appareil électroménager dont la chaudière est fiable et fonctionne en toute sécurité.

Afin d'atteindre ces objectifs et selon une forme de réalisation de l'appareil électroménager conforme à l'invention, la chambre d'ébullition de la chaudière, comprend un fond, une paroi verticale et des moyens de chauffe, la surface de la paroi verticale étant supérieure à la surface du fond de la chambre et les moyens de chauffe étant formés par une résistance électrique rapportée sur la paroi verticale. Dans une telle chaudière, la surface d'échange entre les moyens de chauffe et l'eau est importante et permet d'obtenir une production rapide et importante d'eau chaude.

Selon l'invention, les moyens de chauffe peuvent être réalisés de toutes manières appropriées et par exemple par enroulement d'un élément chauffant résistif autour et contre la paroi verticale de la chaudière. Selon une variante de cette forme de réalisation, les moyens de chauffe comprennent une résistance électrique sérigraphiée sur la face externe de la paroi verticale. Une telle résistance électrique sérigraphiée permet d'obtenir des moyens de chauffe de faible inertie thermique et ainsi, d'avoir une mise en chauffe très rapide de la chaudière. De plus, lors de l'arrêt de l'alimentation électrique de la résistance électrique sérigraphiée en cours de cycle, la production d'eau chaude s'arrête immédiatement. La dépose de la résistance électrique par sérigraphie permet de répartir uniformément la résistance sur la surface de la paroi verticale en évitant ainsi les points chauds.

De plus la mise en oeuvre d'une chambre d'ébullition verticale de forme allongée, plus haute que large, permet de produire de petites salves d'eau chaude successives induisant un écoulement proche d'un écoulement continu au niveau de la tête de distribution.

Selon l'une caractéristique de l'invention, la chaudière comprend en entrée de la chambre d'ébullition au moins un clapet anti-retour orienté dans le sens d'un passage de l'eau vers la chambre d'ébullition. Cette disposition permet d'obtenir de manière très économique une chaudière alimentée par gravité en eau présentant une grande efficacité tout en ayant une section d'entrée ou d'alimentation suffisamment importante pour permettre son remplissage rapide.

Selon une autre caractéristique de l'invention, la chambre d'ébullition comprend une sortie, un tube ascendant d'évacuation de l'eau chauffée dont l'extrémité inférieure est disposée à proximité du fond de la chambre d'ébullition et l'extrémité supérieure est raccordée à la sortie de la chambre d'ébullition, le tube ascendant présentant une ouverture débouchant dans la chambre d'ébullition à proximité de la sortie de la chambre d'ébullition. Cette caractéristique, lorsqu'elle est prise en combinaison avec la forme allongée et verticale de la chambre d'ébullition dont les moyens de chauffage sont rapportés sur la paroi verticale de la chambre, permet lors du début de l'ébullition de produire de la vapeur sur la face interne de la paroi verticale. La vapeur générée va alors pousser l'eau chaude vers le centre de la chambre, facilitant ainsi son expulsion par le tube ascendant. Le tube ascendant pourra alors être avantageusement disposé au centre de la chambre d'ébullition. La présence de l'ouverture aménagée dans le tube ascendant à proximité du plafond de la chambre d'ébullition, vise à autoriser l'évacuation d'une partie au moins de l'air contenu dans la chambre d'ébullition et le tube ascendant lors du remplissage de la chambre d'ébullition. Cette ouverture permet également la circulation par convection de l'eau contenue dans le tube ascendant vers le reste de la chambre d'ébullition en début de chauffage de cette dernière.

Selon encore une autre caractéristique de l'invention, la chaudière comprend en sortie de la chambre d'ébullition au moins un clapet anti-retour orienté dans le sens d'une sortie de l'eau hors de la chambre d'ébullition. Ce clapet anti-retour en sortie de la chambre d'ébullition permet d'optimiser plus encore le fonctionnement de l'appareil électroménager. En effet, après l'expulsion de l'eau chauffée contenue dans la chambre par le tube ascendant, une dépression se crée dans la chambre. Le clapet anti-retour sur la sortie de la chambre se ferme alors et le remplissage se fait de manière très rapide uniquement par le clapet anti-retour de l'alimentation en eau. Ainsi, il est possible d'enchaîner les cycles de production d'eau chaude sans couper l'alimentation des éléments chauffants lors du remplissage de la chaudière. Cette disposition permet d'éviter les problèmes normatifs liés aux cycles alimentation-coupure successifs.

Selon l'invention le tube vertical portant les moyens de chauffage est, de préférence, réalisé en métal et de manière plus particulièrement préférée en acier inoxydable.

Selon une forme de réalisation de l'invention, la tête de distribution, de l'appareil électroménager comprend une chambre de séparation de l'eau et de la vapeur. Cette disposition permet d'obtenir un écoulement calme à la sortie de l'eau chaude en limitant les projections et permet d'obtenir une confirmation visuelle pour l'utilisateur par l'échappement de la vapeur par un conduit que l'eau a bien été portée à ébullition.

Avantageusement, la sortie de la chambre de séparation est dimensionnée pour ralentir le débit d'écoulement de l'eau chaude, la chambre de séparation faisant alors office de réservoir tampon. Cette disposition permet d'obtenir un écoulement continu et se trouve particulièrement avantageuse lorsque l'appareil électroménager selon l'invention forme une fontaine à eau chaude devant produire rapidement et en grande quantité de l'eau chaude à une température proche de la température d'ébullition.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

Par ailleurs, diverses autres caractéristiques de l'invention ressortent de la description annexée effectuée en référence aux dessins qui illustrent des formes non limitatives de réalisation d'un appareil électroménager selon l'invention.
- La figure 1 est une vue en coupe d'un appareil électroménager selon l'invention formant une fontaine à eau chaude.
- La figure 2 est une perspective schématique d'un ensemble de production d'eau chaude, à savoir chaudière, réservoir principal et réserve intermédiaire, constitutif de l'appareil électroménager représenté à la figure 1.
- La figure 3 est une vue en développé à plat des moyens de chauffe de la chaudière de l'appareil représenté aux figures 1 et 2.
- La figure 4 est une coupe schématique d'une autre forme de réalisation de l'ensemble de production d'eau chaude d'un appareil électroménager selon l'invention.

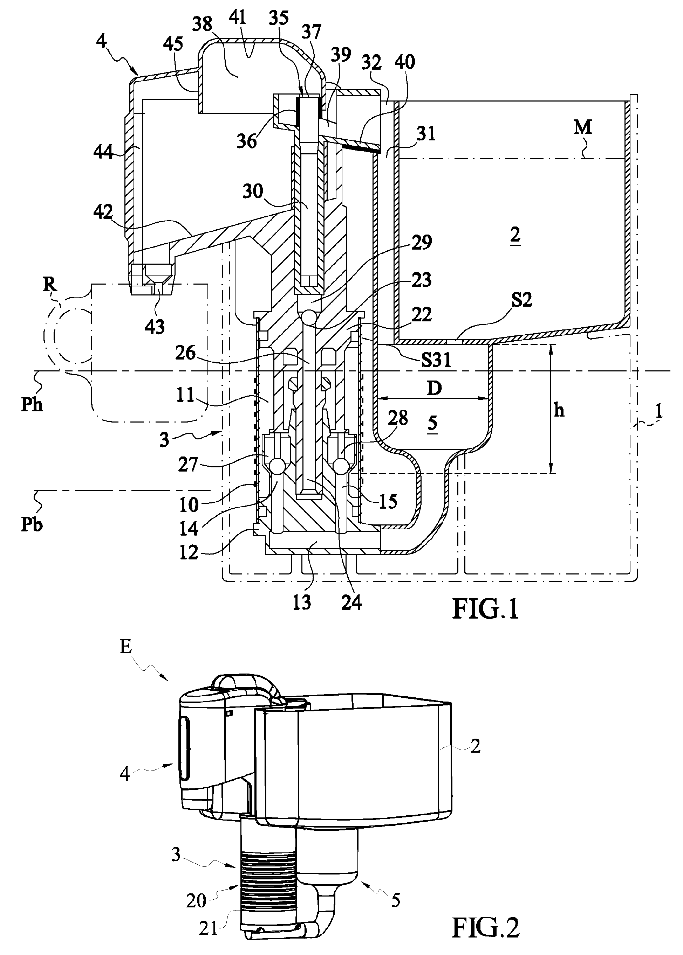

Un appareil électroménager selon l'invention peut par exemple constituer une fontaine à eau chaude telle qu'illustrée à la figure 1. Selon cet exemple de réalisation l'appareil électroménager comprend un corps creux 1 à l'intérieur duquel est, en partie au moins, disposé à un ensemble E de production d'eau chaude illustré seul à la figure 2. L'ensemble de production d'eau chaude E comprend un réservoir principal 2 ouvert à l'air libre et destiné à contenir une quantité d'eau suffisante pour remplir, plusieurs fois, d'eau chaude un récipient R tel qu'une tasse ou un mug illustré en trait mixte à la figure 1. L'ensemble de production d'eau chaude E comprend une chaudière 3 qui est alimentée par gravité en eau à partir du réservoir principal 2 et qui fournit de l'eau chaude à une tête de distribution 4 sous laquelle est placé le récipient R. L'ensemble de production d'eau chaude E comprend en outre une réserve intermédiaire 5 qui est interposée entre le réservoir principal 2 et la chaudière 3.

Selon l'exemple de réalisation représenté aux figures 1 et 2, la chaudière 2 comprend une paroi verticale 10 périphérique formée ici par un tube métallique cylindrique de révolution d'axe vertical. La paroi verticale 10 périphérique délimite une chambre d'ébullition 11 et se trouve obturée au niveau de son extrémité inférieure par un bouchon inférieur 12 raccordé à la réserve intermédiaire 5. Le bouchon inférieur 12 comprend alors un canal d'alimentation 13 qui communique avec l'intérieur de la réserve intermédiaire 5 et qui débouche par deux entrées 14, 15 dans la chambre d'ébullition 11.

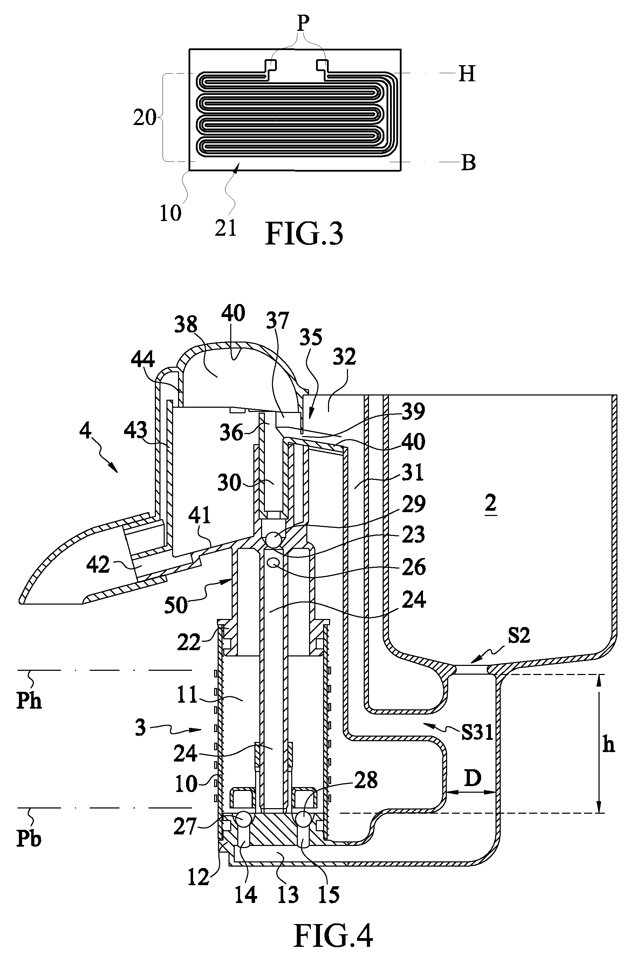

La paroi verticale 10 est équipée de moyens de chauffe 20 comprenant une résistance électrique 21 sérigraphiée à l'extérieur de la paroi verticale 10 et destinée à chauffer l'eau située dans la chambre d'ébullition 11. La figure 3 représente la paroi verticale 10 développée à plat avec les moyens de chauffe 20. La résistance électrique sérigraphiée 21 est ici réalisée sous la forme de deux pistes sérigraphiées qui s'étendent sur une partie de la hauteur de la paroi verticale 10 entre un point bas B et un point au H. Les pistes sérigraphiées sont disposées sur un support électriquement isolant, par exemple une couche de matériau émaillé appliquée sur la face extérieure de la paroi verticale 10. Les pistes sérigraphiées présentent des plots P de connexion à des moyens de commande et d'alimentation non représentés sur les figures. Les moyens de commande comprennent notamment des moyens de régulation thermique du type thermostat ou capteur de température CTN associé à une carte électronique qui coupent l'alimentation électrique lorsque la température de la paroi verticale 10 dépasse une température de consigne et des moyens de sécurité thermique du type fusible qui coupent l'alimentation électrique en cas de surchauffe anormale.

La paroi verticale 10 est obturée au niveau de son extrémité supérieure par un bouchon supérieur 22 comprenant une sortie 23 pour l'évacuation de l'eau chaude formée dans la chambre 11. La sortie 23 permet également l'évacuation de la vapeur qui fait office de propulseur de l'eau chaude.

La chaudière 3 comprend à l'intérieur de la chambre 11 un tube ascendant 24 d'évacuation de l'eau chauffée. L'extrémité supérieure du tube ascendant 24 est alignée avec la sortie 23 tandis que l'extrémité inférieure du tube ascendant 24 est située en partie basse de la chambre 11 en s'étendant ici à l'intérieur du bouchon inférieur 12 qui présente alors au moins un canal non représenté de raccordement de l'extrémité inférieure du tube 24 à la chambre d'ébullition 11. Selon l'exemple illustré le tube 24 est solidaire du bouchon supérieur 22 formant le plafond de la chambre d'ébullition 11. Le tube ascendant 24 comporte une ouverture 26 qui est située à proximité du plafond et qui établit une communication entre l'intérieur du tube ascendant 24 et la chambre d'ébullition 11.

Les bouchons inférieur 12 et supérieur 22 sont conformés pour s'étendre à l'intérieur du volume délimité par la paroi verticale 10 de manière que la chambre d'ébullition présente une capacité ou contenance inférieure au volume total délimité par la paroi verticale 10. Selon l'exemple illustré, les bouchons inférieur 12 et supérieur 22 sont conformés pour que la capacité de la partie de la chambre d'ébullition 11 comprise entre un plan horizontal bas Pb passant par le point bas B et un plan horizontal haut Ph passant par le point haut H soit inférieure ou égal à 90% du volume total délimité par la paroi verticale.

La chambre d'ébullition 11 est alimentée en eau par gravité à partir du réservoir principal 2 par l'intermédiaire de la réserve intermédiaire 5. Le point le plus bas du réservoir principal 2 est alors situé au dessus des moyens de chauffe 20 et plus particulièrement au-dessus du plan Ph.

Les entrées 14, 15 pratiquées dans le bouchon inférieur 12 sont chacune associées à un clapet anti-retour 27, 28 à bille orienté dans le sens d'une circulation de l'eau depuis la réserve intermédiaire 5 vers la chambre d'ébullition 11 et destiné à empêcher toute circulation de fluide en sens inverse de la chambre d'ébullition 11 vers la réserve intermédiaire 5.

La sortie 23 pratiquée dans le bouchon supérieur 22 est également associée un clapet anti-retour 29 à bille orienté dans le sens d'une circulation de l'eau et/ou de la vapeur à partir de la chambre d'ébullition 11 vers la tête de distribution 4, et destiné à empêcher toute circulation de fluide en sens inverse vers la chambre d'ébullition 11.

La sortie 23 est prolongée par une canalisation ascendante 30 qui raccorde la chambre d'ébullition 11 à la tête de distribution 4.

L'appareil électroménager selon l'invention est mis en oeuvre de la manière suivante.

Tout d'abord, le réservoir principal 2 est rempli, par un utilisateur, d'eau en quantité suffisante pour la préparation que souhaite réaliser l'utilisateur et de préférence jusqu'à un niveau de remplissage maximum M du réservoir principal 2. L'eau va alors s'écouler dans la réserve intermédiaire 5 puis pénétrer dans la chambre 11 par les entrées 14 et 15 en passant les clapets anti-retour 27, 28. L'eau monte par gravité à l'intérieur de la chambre d'ébullition 11 et s'introduit dans le tube ascendant 24. Dans sa progression, l'eau va chasser l'air contenu dans la chambre 11 par l'ouverture 26 puis par la sortie 23 pratiquée dans le bouchon supérieur 22 et va remplir la canalisation ascendante 30 jusqu'à ce que le niveau d'eau dans le réservoir 2 s'équilibre avec le niveau d'eau dans ladite canalisation ascendante 30.

L'utilisateur commande l'alimentation de la résistance électrique 21 sérigraphiée pour fournir une puissance de chauffe comprise par exemple entre 2000 et 3000 W. L'eau contenue dans la chambre 11 est portée à ébullition et de la vapeur commence à être générée sur la face interne de la paroi verticale 10. L'ouverture 26 du tube 24 est dimensionnée pour autoriser une circulation de l'eau par convection tout en limitant la quantité de vapeur susceptible de s'y échapper. Ainsi, la majeure partie de la vapeur crée dans la chambre d'ébullition 11 une pression qui pousse l'eau chaude dans le tube ascendant 24 vers la sortie 23 pour passer par le clapet anti-retour 29 dans la canalisation ascendante 30.

Après l'expulsion de toute l'eau chaude hors de la chambre 11, la vapeur résiduelle dans la chambre 11 se condense alors très rapidement sur les parties froides, provoquant une dépression qui ferme le clapet anti-retour 29 et aspire violemment l'eau du canal d'alimentation 13 au travers des clapets anti-retour 27, 28.

En l'absence de la réserve intermédiaire 5, l'aspiration violente engendrée par la dépression induirait dans le réservoir principal 2 un vortex qui pourrait, lorsque la hauteur d'eau à l'intérieur dudit réservoir principal 2 est faible, inspirer de l'air alors même que le réservoir principal 2 contiendrait suffisamment d'eau pour remplir complètement la chambre d'ébullition 11. L'air aspiré réduirait d'autant la quantité d'eau présente dans la chambre d'ébullition et altérerait l'efficacité de la chaudière.

La mise en oeuvre de la réserve intermédiaire 5 évite donc l'aspiration d'air intempestif alors que le réservoir principal 2 contient encore suffisamment d'eau pour remplir complètement la chambre d'ébullition. Afin de permettre un remplissage rapide de la chambre d'ébullition 11 sous l'effet de l'aspiration induite par la condensation de la vapeur résiduelle, la réserve intermédiaire 5 présente un volume supérieur ou égal au volume de la chambre d'ébullition 11 et se trouve raccordée directement à l'air libre indépendamment du réservoir principal 2. Selon l'exemple illustré, ce raccordement à l'air libre est assuré par un conduit d'évent 31 dont l'ouverture supérieure 32 se trouve plus haut que le niveau maximum M de remplissage du réservoir principal 2. Selon l'exemple illustré afin de garantir au mieux l'effet anti-aspiration d'air, la réserve intermédiaire 5 présente une section de passage maximale dont la plus grande dimension D est inférieure à la hauteur d'eau h mesurée entre l'entrée de la chambre d'ébullition 11 et le niveau de remplissage maximum de la réserve intermédiaire 5, le réservoir principal 2 étant vide. Dans le cas où la réserve intermédiaire 5 présente une forme cylindrique de révolution la plus grande dimension D correspond au diamètre de la plus grande section de passage de la réserve intermédiaire 5.

Le remplissage de la chambre d'ébullition 11, induit par la dépression, est très rapide, de sorte qu'il est possible de maintenir l'alimentation de la résistance électrique 21 pendant chaque phase de remplissage sans risque de surchauffe. Ainsi les cycles de production d'eau chaude peuvent s'enchaîner jusqu'à ce que l'utilisateur ait recueilli dans le récipient R la quantité d'eau chaude souhaitée. L'utilisateur coupe alors l'alimentation électrique de la résistance électrique 21 sérigraphiée par l'intermédiaire d'un organe de commande, non représenté.

Il a été vu précédemment que, lors du remplissage initial du réservoir principal 2, l'eau versée dans ce dernier se répartit dans l'ensemble du circuit jusqu'à atteindre dans la canalisation 30 un niveau égal à celui de l'eau dans le réservoir principal 2. Or, l'eau située dans la canalisation 30 au-dessus de la sortie 23 se trouve en dehors de la chaudière 3 et n'est donc pas chauffée par cette dernière. Ainsi lors de l'expulsion de l'eau chaude sous l'effet de la vapeur, l'eau chaude provenant de la chambre d'ébullition risque d'être mélangée à l'eau tiède voire froide contenue jusqu'à présent dans la canalisation 30 ce qui aurait pour effet de réduire la température de l'eau délivrée au niveau de la tête de distribution.

Afin d'éviter un tel désagrément l'appareil électroménager, selon la forme de réalisation illustrée, comprend des moyens 35 de séparation de l'eau tiède contenue initialement avant ébullition dans la canalisation ascendante 30 voire contenue dans le tube ascendant 24.

Les moyens de séparation 35 comprennent en partie terminale de la canalisation ascendante 30 un canal vertical 36 qui possède une bouche de sortie 37 s'ouvrant dans une chambre de séparation 38 de la tête de distribution 4. Le canal vertical 36 est raccordée par une sortie latérale 39, située à un niveau inférieur à celui de la bouche 37, au conduit d'évent 31 par un conduit d'évacuation d'eau tiède 40. Selon l'exemple illustré, le conduit d'évacuation d'eau tiède 40 prend la forme d'un déversoir incliné vers le conduit d'évent 31. L'eau tiède sera donc recyclée vers la réserve intermédiaire 5. Afin de favoriser l'aspiration de l'eau tiède du conduit d'évent 31 par rapport à celle de l'eau froide du réservoir 2, la section minimale de passage S31 du conduit d'évent 31, est supérieure à la section minimale S2 du raccordement de la réserve intermédiaire 5 au réservoir principal 2.

Ainsi, à chaque cycle de chauffage et notamment lors du premier cycle, la pression, générée par le début de l'ébullition, pousse lentement l'eau contenue dans le tube ascendant 5 et la canalisation 30 vers le haut. La vitesse de l'eau étant faible, l'eau s'écoule alors naturellement par la sortie latérale 39 dans le conduit d'évacuation d'eau tiède 40 qui la dirige dans le conduit d'évent 31 pour retourner dans la réserve intermédiaire 5. Lorsque l'ébullition est atteinte, la pression générée par un afflux soudain de vapeur dans la chambre 11 est telle que l'eau résiduelle dans la chambre 11 est propulsée dans le tube ascendant 24 et la canalisation 30 à une vitesse suffisante pour être projetée par la bouche 37 dans la chambre 38 qui assure une séparation de l'eau chaude et de la vapeur comme cela va ressortir de ce qui suit.

Le jet d'eau et de vapeur, projeté dans la chambre de séparation 38, est dirigé par un plafond 41 de forme arrondie vers un fond 42 de la chambre de séparation 38. Le fond 42 est incliné vers un orifice de distribution 43 de l'eau qui possède une section de passage inférieure à celle de la bouche 37. Ainsi l'eau chaude recueillie au niveau du fond 42 s'écoulera par l'orifice de distribution 43 à un débit inférieur à celui de l'eau au moment de son expulsion par la bouche 37 de sorte qu'il y aura une accumulation temporaire d'eau dans la tête de distribution 4. Cette accumulation temporaire d'eau donnera à l'utilisateur l'impression d'une production en continu d'eau chaude. À cet effet, la section de l'orifice de distribution 43 pourra être choisie pour que la durée de vidange de la tête de distribution 4 soit légèrement inférieure voire égale à la durée d'un cycle de chauffage - ébullition - vidange- remplissage de la chambre d'ébullition 11.

Par ailleurs, la tête de distribution 4 comprend un conduit d'évacuation de vapeur 44 qui est ouvert en partie haute de la tête de distribution et qui débouche à proximité de l'orifice de distribution d'eau 43. Le plafond 41 comprend un bord 45 qui s'étend vers le bas et qui est destiné à empêcher les projections d'eau dans le conduit d'évacuation de vapeur 44. Ainsi, lors du fonctionnement de l'appareil la vapeur, accumulée dans la tête de distribution 4, s'échappera par la sortie du conduit 44 située à proximité de l'orifice de distribution 43 confirmant à l'utilisateur le caractère chaud de l'eau s'écoulant par ledit orifice 43.

Selon l'exemple illustré aux figures 1 et 2, la réserve intermédiaire 5 est formée par un réservoir tampon situé sous le réservoir principal 2. Toutefois, comme le montre la figure 4, la réserve intermédiaire 5 pourrait être définie par les canalisations de raccordement du réservoir principal 2 à la chambre d'ébullition 11. Ces canalisations de raccordement sont alors dimensionnées pour contenir un volume d'eau supérieur ou égal à la capacité de la chambre d'ébullition 11.

Selon l'exemple de réalisation de la figure 4, l'appareil délivre un volume d'eau chaude à une température supérieure à 90°C, prévu pour être contenu dans le récipient d'environ 25 cl disposé sous la sortie de distribution d'eau chaude 43.

La chambre 11 possède un volume compris entre 7 et 10 cl. La chaudière 3 devra donc fournir 3 cycles de production d'eau chaude pour remplir le récipient R. La résistance électrique sérigraphiée sera choisie pour avoir une puissance comprise entre 2500 et 3000 W sous 240 V de sorte que le temps pour réaliser un cycle de production d'eau chaude sera inférieur à 10 s. Le temps total pour délivrer une tasse d'eau chaude sera donc inférieur à 30 s.

Bien entendu, diverses autres modifications peuvent être apportées à l'appareil électroménager selon l'invention dans le cadre des revendications annexées.

## Revendications

1. Appareil électroménager pour la préparation de boissons à base d'eau chaude comprenant :
- un réservoir principal (2) ouvert à l'air libre,
- une chaudière (3) comprenant une chambre d'ébullition (11) alimentée en eau par gravité à partir du réservoir principal (2),
- une tête (4) de distribution d'eau chaude raccordée à la chambre d'ébullition (11) de manière à être alimentée en eau chaude par ladite chambre d'ébullition (11),
l'appareil comprenant en outre une réserve intermédiaire (5) d'eau :
- qui est interposée entre le réservoir principal (2) et la chambre d'ébullition (11) de manière à, d'une part, être alimentée en eau par gravité par le réservoir principal (2) au travers d'un raccordement (S31) et, d'autre part, alimenter en eau par gravité la chambre d'ébullition (11),
- et qui présente un volume supérieur ou égal au volume de la chambre d'ébullition (11),
la tête de distribution (4) comprenant un conduit d'évacuation d'eau tiède (40) qui est raccordé à la réserve intermédiaire (5), la chambre d'ébullition (11) comprenant une sortie (23) raccordée à la tête de distribution (4) par une canalisation ascendante (30) qui comprend des moyens (35) de séparation de l'eau tiède, contenue initialement avant ébullition dans la canalisation ascendante (30), de l'eau plus chaude en provenance de la chambre d'ébullition (11), les moyens de séparation (35) étant adaptés pour évacuer l'eau tiède dans le conduit d'évacuation (40) et les moyens de séparation (35) comprenant, en partie terminale de la canalisation ascendante (30), un canal vertical (36) qui possède une bouche de sortie (37) dans une chambre de séparation (38) de la tête de distribution (4), **caractérisé en ce que** le canal vertical est raccordé par une sortie latérale (39), située en dessous de la bouche de sortie (37), au conduit d'évacuation d'eau tiède (40), et **en ce que** la réserve intermédiaire (5) est raccordée directement à l'air libre par un conduit d'évent (31), indépendamment du réservoir principal (2).

2. Appareil électroménager selon la revendication 1, **caractérisé en ce que** la réserve intermédiaire (5) présente une section de passage maximale dont la plus grande dimension (D) est inférieure à la hauteur d'eau (h) mesurée entre l'entrée de la chambre d'ébullition (11) et le niveau de remplissage maximum de la réserve intermédiaire (5), le réservoir principal (2) étant vide.

3. Appareil électroménager selon la revendication 1 ou 2, **caractérisé en ce que** la réserve intermédiaire (5) présente une section de passage maximale de forme circulaire dont le diamètre (D) est inférieur à la hauteur d'eau (h) mesurée entre l'entrée de la chambre d'ébullition (11) et le niveau de remplissage maximum de la réserve intermédiaire (5), le réservoir principal (2) étant vide.

4. Appareil électroménager selon l'une des revendications précédentes, **caractérisé en ce que** le conduit d'évacuation d'eau tiède (40) débouche dans le conduit d'évent (31), ledit conduit d'évent (31) assurant le raccordement du conduit d'évacuation d'eau tiède (40) à la réserve intermédiaire (5).

5. Appareil électroménager selon la revendication 4, **caractérisé en ce que** le conduit d'évent (31) comporte une section minimale de passage (S31) supérieure à la section minimale (S2) du raccordement de la réserve intermédiaire (5) au réservoir principal (2).

6. Appareil électroménager selon l'une des revendications précédentes, **caractérisé en ce que** la section de passage de la bouche de sortie (37) est supérieure à la section de passage de la sortie latérale (39).

7. Appareil électroménager selon l'une des revendications précédentes, **caractérisé en ce que** la chambre d'ébullition (11) comprend un fond, une paroi verticale (10) et des moyens de chauffe (20), la surface de la paroi verticale (10) étant supérieure à la surface du fond de la chambre et les moyens de chauffe (20) étant formés par une résistance électrique (21) rapportée sur la paroi verticale (10).

8. Appareil électroménager selon l'une des revendications précédentes, **caractérisé en ce que** la chaudière (3) comprend en entrée de la chambre d'ébullition au moins un clapet anti-retour (27) orienté dans le sens d'un passage de l'eau vers la chambre d'ébullition (11).

9. Appareil électroménager selon l'une des revendications précédentes, **caractérisé en ce que** la chambre d'ébullition (11) comprend une sortie (23), un tube ascendant (24) d'évacuation de l'eau chauffée dont l'extrémité inférieure est disposée à proximité du fond de la chambre d'ébullition et dont l'extrémité supérieure est raccordée à la sortie (23) de la chambre d'ébullition, le tube ascendant (24) présentant une ouverture (26) débouchant dans la chambre d'ébullition (11) à proximité de la sortie (23) de la chambre d'ébullition.

10. Appareil électroménager selon la revendication 9, **caractérisé en ce que** les moyens de séparation (35) sont adaptés pour assurer l'évacuation, par la conduite d'évacuation (40), de l'eau tiède contenue initialement avant ébullition dans le tube ascendant (24).

11. Appareil électroménager selon l'une des revendications précédentes, **caractérisé en ce que** la chaudière (3) comprend en sortie de la chambre d'ébullition au moins un clapet anti-retour (29) orienté dans le sens d'une sortie de l'eau hors de la chambre d'ébullition (11).

12. Appareil électroménager selon l'une des revendications précédentes, **caractérisé en ce que** la tête de distribution (4) comprend une chambre (38) de séparation de l'eau et de la vapeur.

## Patentansprüche

1. Haushaltselektrogerät zur Zubereitung von Getränken auf Basis von Heißwasser, bestehend aus:
- einem zur Umgebung offenen Hauptbehälter (2),
- einem Kessel (3) mit einer Siedekammer (11), die über den Hauptbehälter (2) mittels Schwerkraft mit Wasser versorgt wird,
- einem Heißwasser-Verteilerkopf (4), der an die Siedekammer (11) angeschlossen ist und auf diese Weise über die genannte Siedekammer (11) mit Heißwasser versorgt wird,
wobei das Gerät des Weiteren "besteht aus"
einem Wasser-Zwischenvorratsbehälter (5):
- der zwischen dem Hauptbehälter (2) und der Siedekammer (11) angeordnet ist, so dass er einerseits mittels Schwerkraft über den Hauptbehälter (2) durch einen Anschluss (S31) mit Wasser versorgt wird und andererseits mittels Schwerkraft die Siedekammer (11) mit Wasser versorgt,
- und dessen Volumen gleich oder größer als das Volumen der Siedekammer (11) ist,
wobei der Verteilerkopf (4) eine Auslassleitung für lauwarmes Wasser (40) aufweist, die an den Zwischenvorratsbehälter (5) angeschlossen ist, und wobei die Siedekammer (11) "besteht aus"
einem Auslass (23) mit Anschluss an den Verteilerkopf (4) über einen ansteigenden Kanal (30), der Vorrichtungen (35) zur Abscheidung des lauwarmen Wassers, das sich vor dem Siedevorgang in dem ansteigenden Kanal (30) befindet, und des wärmeren Wassers aus der Siedekammer (11) aufweist, wobei die Abscheidevorrichtungen (35) so angepasst sind, dass das lauwarme Wasser in die Auslassleitung (40) geleitet wird, und wobei die Abscheidevorrichtungen (35) "bestehen aus" einem vertikalen Kanal (36) im Endbereich des ansteigenden Kanals (30), der einen Auslassstutzen (37) in eine Abscheidekammer (38) des Verteilerkopfes (4) aufweist, "**dadurch gekennzeichnet, dass** der vertikale Kanal" durch einen seitlichen Auslass (39) unterhalb des Auslassstutzens (37) an die Auslassleitung für lauwarmes Wasser "(40) angeschlossen ist, und dass der Zwischenvorratsbehälter (5) durch eine Entlüftungsleitung (31), unabhängig vom Hauptbehälter (2), direkt mit der offenen Umgebung verbunden ist."

2. Haushaltselektrogerät nach Anspruch 1, **dadurch gekennzeichnet, dass** der Zwischenvorratsbehälter (5) einen maximalen Durchflussquerschnitt aufweist, dessen größte Abmessung (D) geringer ist als die zwischen dem Einlass der Siedekammer (11) und dem maximalen Füllstand des Zwischenvorratsbehälters (5) gemessene Wasserhöhe (h) bei leerem Hauptbehälter (2).

3. Haushaltselektrogerät nach Anspruch 1 oder 2, **dadurch gekennzeichnet, dass** der Zwischenvorratsbehälter (5) einen maximalen Durchflussquerschnitt in runder Form aufweist, dessen Durchmesser (D) geringer ist als die zwischen dem Einlass der Siedekammer (11) und dem maximalen Füllstand des Zwischenvorratsbehälters (5) gemessene Wasserhöhe (h) bei leerem Hauptbehälter (2).

4. Haushaltselektrogerät nach einem der vorhergehenden Ansprüche, **dadurch gekennzeichnet, dass** die Auslassleitung für lauwarmes Wasser (40) in die Entlüftungsleitung (31) mündet, wobei die genannte Entlüftungsleitung (31) die Verbindung zwischen der Auslassleitung für lauwarmes Wasser (40) und dem Zwischenvorratsbehälter (5) sicherstellt.

5. Haushaltselektrogerät nach Anspruch 4, **dadurch gekennzeichnet, dass** die Entlüftungsleitung (31) einen Mindest-Durchflussquerschnitt (S31) aufweist, der größer ist als der Mindest-Querschnitt (S2) des Anschlusses des Zwischenvorratsbehälters (5) an den Hauptbehälter (2).

6. Haushaltselektrogerät nach einem der vorhergehenden Ansprüche, **dadurch gekennzeichnet, dass** der Durchflussquerschnitt des Auslassstutzens (37) größer ist als der Durchflussquerschnitt des seitlichen Auslasses (39).

7. Haushaltselektrogerät nach einem der vorhergehenden Ansprüche, **dadurch gekennzeichnet, dass** die Siedekammer (11) einen Boden, eine vertikale Wand (10) und Heizvorrichtungen (20) umfasst, wobei die Fläche der vertikalen Wand (10) größer ist als die Fläche des Bodens der Kammer und die Heizvorrichtungen (20) durch einen elektrischen Widerstand (21) gegen die vertikale Wand (10) ausgebildet sind.

8. Haushaltselektrogerät nach einem der vorhergehenden Ansprüche, **dadurch gekennzeichnet, dass** der Kessel (3) am Einlass der Siedekammer mindestens ein Rückschlagventil (27) aufweist, das in Richtung des Wasserdurchflusses in die Siedekammer (11) ausgerichtet ist.

9. Haushaltselektrogerät nach einem der vorhergehenden Ansprüche, **dadurch gekennzeichnet, dass** die Siedekammer (11) einen Auslass (23) und ein aufsteigendes Rohr (24) zur Ableitung des erhitzten Wassers aufweist, dessen unteres Ende in der Nähe des Bodens der Siedekammer angeordnet ist und dessen oberes Ende an den Auslass (23) der Siedekammer angeschlossen ist, wobei das aufsteigende Rohr (24) eine Öffnung (26) aufweist, die in der Nähe des Auslasses (23) der Siedekammer in die Siedekammer (11) mündet.

10. Haushaltselektrogerät nach Anspruch 9, **dadurch gekennzeichnet, dass** die Abscheidevorrichtungen (35) so angepasst sind, dass die Ableitung, über die Auslassleitung (40), des lauwarmen Wassers sichergestellt ist, das sich zunächst vor dem Siedevorgang im aufsteigenden Rohr (24) befindet.

11. Haushaltselektrogerät nach einem der vorhergehenden Ansprüche, **dadurch gekennzeichnet, dass** der Kessel (3) am Auslass der Siedekammer mindestens ein Rückschlagventil (29) aufweist, das in Richtung des Wasserabflusses aus der Siedekammer (11) ausgerichtet ist.

12. Haushaltselektrogerät nach einem der vorhergehenden Ansprüche, **dadurch gekennzeichnet, dass** der Verteilerkopf (4) eine Kammer (38) zur Trennung von Wasser und Dampf aufweist.

## Claims

1. Household appliance for preparing hot-water-based drinks comprising:
- a main tank (2) open to the air,
- a boiler (3) comprising a boiling chamber (11) gravity-fed with water from the main tank (2),
- a hot water distribution head (4) connected to the boiling chamber (11) in such a way as to be supplied with hot water by said boiling chamber (11),
the appliance further comprises
an intermediate water reserve (5):
- which is interposed between the main tank (2) and the boiling chamber (11) in such a way as to be gravity-fed with water by the main tank (2) via a connector (S31) and to gravity-feed the boiling chamber (11) with water,
- and has a volume greater than or equal to the volume of the boiling chamber (11),
the distribution head (4) comprises a warm water discharge duct (40) that is connected to the intermediate reserve (5), the boiling chamber (11) comprising
an outlet (23) connected to the distribution head (4) by an ascending pipeline (30) which comprises means (35) of separating the warm water, initially contained in the ascending pipe (30), from the warmer water from the boiling chamber (11), the separating means (35) being adapted to discharge the warm water into the drainage outlet (40) and the separating means (35) comprising, in the terminal part of the ascending pipe (30), a vertical channel (36) having an outlet mouth (37) in a separation chamber (38) of the distribution head, (4) **characterised in that** the vertical channel (36) is connected by a lateral outlet (39) located below the outlet mouth (37) to the warm water drainage channel (40), and **in that** the intermediate reserve (5) is directly opened to the air via a vent duct (31), independent from the main tank (2).

2. Household appliance according to claim 1, **characterised in that** the intermediate reserve (5) has a maximum passage section whose largest dimension (D) is smaller than the water depth (h) measured between the entry of the boiling chamber (11) and the maximum filling level of the intermediate reserve (5), the main tank (2) being empty.

3. Household appliance according to claim 1 or 2, **characterised in that** the intermediate storage (5) has a maximum passage section with a circular shape whose a diameter (D) is smaller than the water depth (h) measured between entrance to the boiling chamber (11) and the maximum filling level of the intermediate reserve (5), the main tank (2) being empty.

4. Household appliance according to one of the preceding claims, **characterised in that** the warm water drainage channel (40) opens into the vent duct (31), said vent duct (31) ensuring the connection of the warm water drainage channel (40) to the intermediate storage (5).

5. Household appliance according to claim 4, **characterised in that** the vent duct (31) has a cross sectional flow area (S31) greater than the minimum cross section (S2) connecting the intermediate reserve (5) to the main tank (2).

6. Household appliance according to one of the previous claims, **characterised in that** the flow area of the outlet mouth (37) is greater than the flow area of the lateral outlet (39).

7. Household appliance according to one of the previous claims, **characterised in that** the boiling chamber (11) comprises a bottom, a vertical wall (10) and heating means (20), the surface of the vertical wall (10) being larger than the bottom surface of the chamber and the heating means (20) being formed by an electrical resistor (21) attached to the vertical wall (10).

8. Household appliance according to one of the previous claims, **characterised in that** the boiler (3) comprises at the input of the boiling chamber at least one check valve (27) oriented in the direction of the water flow into the boiling chamber (11).

9. Household appliance according to one of the previous claims, **characterised in that** the boiling chamber (11) comprises an outlet (23), an ascending tube (24), for discharging heated water, whose lower end is disposed near the bottom of the boiling chamber and whose upper end is connected to the output (23) of the boiling chamber, the ascending pipe (24) having an opening (26) which opens into the boiling chamber (11) near the outlet (23) of the boiling chamber.

10. Household appliance according to claim 9, **characterised in that** the separating means (35) are adapted to ensure the removal, via the discharge pipe (40), of the warm water initially contained in the ascending tube (24) before boiling.

11. Household appliance according to one of the previous claims, **characterised in that** the boiler (3) comprises, in the output of the boiling chamber, at least one check valve (29) oriented in the direction of a water outlet from the boiling chamber (11).

12. Household appliance according to one of the previous claims, **characterised in that** the distribution head (4) comprises a chamber (38) for separating water and steam.
